# EUROPÄISCHE PATENTANMELDUNG

(11) **EP 2 422 744 A1**
(43) Veröffentlichungstag der Anmeldung: **29.02.2012**
(21) Anmeldenummer: 10174267.4
(22) Anmeldetag: 27.08.2010
(51) Int. Cl.: A61C 19/00

(54) **Reinigungs- oder Pflegegerät für medizinische, insbesondere zahnärztliche, Instrumente**

(71) Anmelder: W & H Dentalwerk Bürmoos GmbH, 5111 Bürmoos (AT)
(72) Erfinder: Meburger, Jürgen, 5112, Lamprechtshausen (AT); Wimmer, Stefan, 5121, Ostermiething (AT)

(57) **Zusammenfassung**

Reinigungs- oder Pflegegerät (1, 1') für medizinische, insbesondere zahnärztliche, Instrumente mit einem Gehäuse (2, 2'), einer Reinigungs- oder Pflegekammer (3, 3') mit zumindest einer Öffnung (4) zum Einbringen und Entnehmen zumindest eines zu reinigenden oder pflegenden Instruments, sowie einer Medienzuführung (5) zur Versorgung der Reinigungs- oder Pflegekammer (3, 3') mit einem Reinigungs- oder Pflegemittel, wobei das Reinigungs- oder Pflegegerät (1, 1') für die zwischen einer Reinigungs- oder Pflegestellung (6) und einer Bedienungsstellung (7, 7') beweglich gelagerte Reinigungs- oder Pflegekammer (3, 3') einen Antrieb (8) aufweist, welcher die Reinigungs- oder Pflegekammer (3, 3') zwischen der Reinigungs- oder Pflegestellung (6) und der Bedienungsstellung (7, 7') bewegt.

## Beschreibung

Die vorliegende Erfindung bezieht sich auf ein Reinigungs- oder Pflegegerät für medizinische, insbesondere zahnärztliche, Instrumente nach dem Oberbegriff des Anspruchs 1 und auf ein Verfahren zur Aufnahme der medizinischen, insbesondere zahnärztlichen, Instrumente in dem Reinigungs- oder Pflegegerät.

Derartige Reinigungs- oder Pflegegeräte dienen zum Reinigen und/ oder Pflegen medizinischer, insbesondere zahnärztlicher, Instrumente. Als zu reinigende Instrumente werden insbesondere gerade, gebogene, oder pistolenförmige Handstücke als auch Teile von Handstücken, z. B. Handstückköpfe mit einer Werkzeugaufnahme zur Aufnahme eines Behandlungswerkzeugs, Adapter und Kupplungen verstanden. Durch die Handstücke erstrecken sich oftmals Versorgungsleitungen zum Antrieb eines Behandlungswerkzeugs sowie Fluidleitungen. Bei den Leitungen handelt es sich insbesondere um Getriebekanäle oder Fluidkanäle für Luft, Wasser oder Spray.

Nach dem Betrieb der oben angeführten Instrumente bedarf es in regelmäßigen Abständen einer Reinigung und Pflege der Leitungen, insbesondere der Antriebskanäle sowie der Fluidkanäle. Hierzu stehen dem Anwender Reinigung- und Pflegegeräte zu Verfügung. Diese Geräte weisen in einer Reinigungskammer neben einer Vorrichtung zur Außenreinigung, eine Schnittstelle zur Reinigung der im Inneren des Handstücks angeordneten Versorgungs- und Fluidleitungen auf. Bei derartigen Reinigungsgeräten werden die Handstücke vorzugsweise in einer etwa vertikalen Reinigungsstellung in der Reinigungskammer aufgenommen, so dass die überschüssigen Reinigungs- und Pflegemittel aus dem Instrument heraus rinnen können.

Ein derartiges Reinigungsgerät ist aus der US 4,990,087 bekannt.

Dieses bekannte Reinigungsgerät weist ein Gehäuse und eine Reinigungskammer für das zu pflegende Handstück auf, wobei ein Verbindungsteil zur Aufnahme des einen Ende des Handstücks in der Reinigungskammer angeordnet ist. Da das Verbinden des Handstücks mit dem Verbindungsteil in einer etwa vertikalen Pflegestellung für den Anwender umständlich ist, ist die Reinigungskammer um eine horizontale Achse zwischen einer in etwa 45 Grad zur vertikalen Achse des Reinigungsgeräts angeordneten Reinigungsstellung in eine in etwa horizontale Bedienungsstellung schwenkbar gelagert. Zum Verschließen und Öffnen der Reinigungskammer ist eine Klapptür vorgesehen, die an ihrem oberen Rand schwenkbar an dem Reinigungsgerät gelagert ist.

Als nachteilig dieser Ausgestaltung des Reinigungsgeräts erweist sich das aufwendige Beladen der Reinigungskammer mit den medizinischen Instrumenten. Zunächst muss der Anwender die Klapptür des Reinigungsgeräts öffnen, um die Reinigungskammer zugänglich zu machen. Anschließend muss die Kammer aus einer Reinigungsstellung in eine etwa horizontale Bedienungsstellung geschwenkt werden. Nach dem Bestücken der Verbindungsteile mit den medizinischen Handstücken muss die Kammer zurück in die Reinigungsstellung gebracht und mittels der Klapptür verschlossen werden. Diese mehreren Schritte zur Beladung der Reinigungskammer sind für den Anwender zeitaufwendig und daher bedienungsunfreundlich.

Einen weiteren Nachteil der im Stand der Technik bekannten Ausführungsform stellt das manuelle Schwenken der Klapptür und der Reinigungskammer zwischen der Reinigungsstellung und der Bedienungsstellung sowie das Festhalten der Kammer in der Bedienungsstellung dar. Das manuelle Schwenken der Kammer ermöglicht dem Anwender zwar ein einfaches Ankuppeln der Handstücke an die Verbindungsteile in der Bedienungsstellung, jedoch ist er gezwungen die Reinigungskammer in der Bedienungsstelllung festzuhalten. Somit ist die Bestückung der Verbindungsteile für den Anwender sehr umständlich, da er für die Beladung der Reinigungskammer gezwungen ist mit der einen Hand die Kammer in die Bedienungsstellung zu schwenken und zu positionieren und mit der anderen Hand die Kammer zu bestücken.

Der vorliegenden Erfindung liegt daher die Aufgabe zugrunde ein Reinigungs- oder Pflegegerät zu schaffen, welches es ermöglicht die medizinischen, insbesondere zahnärztliche, Instrumente bedienungsfreundlich in einer Reinigungs- oder Pflegekammer aufzunehmen.

Gemäß einem Ausführungsbeispiel weist das Reinigungs- oder Pflegegerät für medizinische, insbesondere zahnärztliche, Instrumente ein Gehäuse, eine Reinigungs-oder Pflegekammer mit zumindest einer Öffnung zum Einbringen und Entnehmen zumindest eines zu reinigenden oder pflegenden Instruments, eine Medienzuführung zur Versorgung der Reinigungs- oder Pflegekammer mit einem Reinigungs- oder Pflegemittel sowie einen Antrieb für die zwischen einer Reinigungs- oder Pflegestellung und einer Bedienungsstellung beweglich gelagerte Reinigungs- oder Pflegekammer auf, welcher die Reinigungs- oder Pflegekammer zwischen der Reinigungs- oder Pflegestellung und der Bedienungsstellung bewegt.

Unter Reinigungs- oder Pflegegerät sind Vorrichtungen zu verstehen, welche die medizinischen, insbesondere zahnärztlichen, Instrumente reinigen, insbesondere von Verschmutzungen befreien, desinfizieren, sterilisieren und/ oder pflegen. Zur Reinigung und/ oder Pflege der medizinischen, insbesondere zahnärztlichen, Instrumente können Fluide, insbesondere Flüssigkeiten, wie zum Beispiel Kaltwasser oder Heißwasser, oder Gase, wie zum Beispiel Wasserdampf oder Druckluft, Desinfektionsmittel, Sterilisationsmittel, oder Schmiermittel, wie zum Beispiel natürliche oder synthetische Schmieröle, verwendet werden.

Der Antrieb des Reinigungs- oder Pflegegeräts ist mittels einer Betätigungseinrichtung aktivierbar. Hierbei ist die Betätigungseinrichtung vorzugsweise als Schalter oder Taster ausgebildet und an der Außenseite des Gehäuses des Reinigungs- oder Pflegegeräts angeordnet. Des Weiteren kann die Betätigungseinrichtung direkt oder indirekt an der Reinigungs- oder Pflegekammer angeordnet sein. Hierbei ist die Betätigungseinrichtung vorzugsweise durch die Tür des Reinigungs- oder Pflegeräts ausgebildet. Durch das Aktivieren der Betätigungseinrichtung wird die Reinigungs- oder Pflegekammer aus einer Reinigungs- oder Pflegestellung in eine Bedienungsstellung oder in eine weitere Stellung zwischen der Reinigungs- oder Pflegestellung und der Bedienungsstellung bewegt und positioniert.

Der Antrieb wird mittels der Betätigungseinrichtung vorzugsweise mechanisch oder elektrisch angesteuert.

Gemäß einem weiteren Ausführungsbeispiel wird der Antrieb durch die Steuerung des Reinigungs- oder Pflegegeräts aktiviert, so dass vorzugsweise vor und/ oder nach einem Reinigungs- oder Pflegeprozess, die Reinigungs- oder Pflegekammer von einer Reinigungs- oder Pflegestellung in eine Bedienungsstellung oder von einer Bedienungsstellung in eine Reinigungs- oder Pflegestellung bewegt wird.

Der Antrieb für die Reinigungs- oder Pflegekammer ist vorzugsweise im Gehäuse des Reinigungs- oder Pflegegeräts angeordnet.

Die Reinigungs- oder Pflegekammer ist mittels des Antriebs entlang zumindest einer Achse bewegbar und/ oder um eine Achse schwenkbar gelagert. In einem bevorzugten Ausführungsbeispiel bewegt der Antrieb die Reinigungs- oder Pflegekammer um und/ oder entlang zumindest zwei Achsen. Nach einem Reinigungs- und/ oder Pflegeprozess bewegt der, bevorzugt von der Steuerung des Reinigungs- oder Pflegegeräts aktivierte, Antrieb die Reinigungs- oder Pflegekammer von einer Reinigungs- oder Pflegestellung linear entlang einer ersten, vorzugsweise vertikalen, Achse in eine zwischen der Reinigungs- oder Pflegestellung und Bedienungsstellung befindliche Ruhestellung. Anschließend wird die Reinigungs- oder Pflegekammer radial um eine zweite, vorzugsweise horizontale, Schwenkachse von einer Ruhestellung in eine Bedienungsstellung geschwenkt. Hierbei schwenkt die Reinigungs- oder Pflegekammer vorzugsweise aus der Bedienungsseite des Reinigungs- oder Pflegeräts und kann seitens des Anwenders über eine Öffnung an der Kammer mit den zu reinigenden und/ oder pflegenden Instrumenten bestückt werden. Diese zweite Schwenkbewegung wird vorzugsweise durch den Anwender mittels des Schalters am Gehäuse des Reinigungs-oder Pflegegeräts ausgelöst.

Die Reinigungs- oder Pflegekammer ist mit ihrer Öffnung zum Einbringen und Entnehmen zumindest eines zu reinigenden oder pflegenden Instruments bewegbar gegen zumindest ein, vorzugsweise am Gehäuse des Reinigungs- oder Pflegegeräts angeordnetes, Wandelement gelagert, so dass das zumindest eine Wandelement die Öffnung der Reinigungs- oder Pflegekammer in einer Reinigungs- oder Pflegestellung schließt. Somit dient die im Ausführungsbeispiel erste Bewegung der Reinigungs- oder Pflegekammer dem Öffnen, Schließen und/ oder Abdichten der Reinigungs- oder Pflegekammer.

Die Medienzuführung zur Versorgung der Reinigungs- oder Pflegekammer mit einem Reinigungs- oder Pflegemittel ist vorzugsweise am Gehäuse des Reinigungs- oder Pflegegeräts, insbesondere an dem zumindest einem Wandelement zum Schließen der Reinigungs- oder Pflegekammer, und/ oder an der Reinigungs- oder Pflegekammer selbst angeordnet. Die Medienzuführung umfasst zum Beispiel zumindest eine Verbindungskupplung zum Anschluss eines Handstücks und/ oder zumindest eine Düse zur Außenreinigung des in der Reinigungs- oder Pflegekammer aufgenommenen Handstücks.

Des Weiteren weist die Reinigungs- oder Pflegekammer zumindest einen Medienablauf auf, um die aufgetragenen Reinigungsmittel sowie überschüssigen Pflegemittel aus der Reinigungs- oder Pflegekammer zu leiten. Gemäß einem Ausführungsbeispiel ist der Medienablauf in der Reinigungs- oder Pflegestellung sowie in der Bedienungsstellung in Fluidverbindung mit dem Medienabfluss des Reinigungs- oder Pflegegeräts, so dass keine Gefahr besteht, dass überschüssige Reinigungs- oder Pflegemittel aus der Kammer in das Gerät oder dessen Umfeld gelangen.

Gemäß einem Ausführungsbeispiel ist der Antrieb ausgebildet die Reinigungs- oder Pflegekammer derart zu positionieren, dass die in der Reinigungs- oder Pflegekammer aufgenommenen Instrumente in der Reinigungs- oder Pflegestellung mit der Medienzuführung, insbesondere der zumindest einen Verbindungskupplung, gekoppelt und in der Bedienungsstellung von der Medienzuführung entkoppelt sind. Durch eine erste Bewegung der Reinigungs- oder Pflegekammer, insbesondere nach einem Reinigungs- und/ oder Pflegeprozess, vorzugsweise linear entlang einer vertikalen Achse, werden die Instrumente von der zumindest einen Verbindungskupplung entkoppelt, oder vor einem Reinigung- oder Pflegeprozess damit gekoppelt. Hierbei sind die Verbindungskupplungen vorzugsweise zweiteilig ausgeführt, wobei ein erster Teil einer Verbindungskupplung mit dem Gehäuse des Reinigungs- oder Pflegegeräts, insbesondere mit dem Wandelement zum Schließen der Reinigungs- oder Pflegekammer, und ein zweiter Teil mit einer Reinigungs- oder Pflegekassette zur Aufnahme der medizinischen, insbesondere zahnärztlichen, Instrumente in der Reinigungs- oder Pflegekammer verbunden ist. Die Reinigungs- oder Pflegekassette ist gemäß diesem Ausführungsbeispiel in die Reinigungs- oder Pflegekammer lösbar einfügbar.

Um die Reinigungs- oder Pflegekammer entlang oder um eine Achse zu bewegen, weist das Reinigungs- oder Pflegegerät des Weiteren eine Führung für die Reinigungs- oder Pflegekammer auf. Diese ist vorzugsweise durch zwei seitlich zur Reinigungs- oder Pflegekammer angeordnete Führungsschienen ausgebildet.

Das vorliegende Reinigungs- oder Pflegegerät zeichnet sich durch eine Reihe erheblicher Vorteile aus.

Durch die Anordnung eines Antriebs für die Reinigungs- oder Pflegekammer in dem Reinigungs- oder Pflegegerät wird dem Anwender eine einfache Handhabung und Bedienung des Geräts gewährleistet. Das selbstständige Bewegen der Reinigungs- oder Pflegekammer aus einer Reinigungs- oder Pflegestellung in eine Ruhestellung und/ oder in eine Bedienungsstellung sowie das Positionieren oder kontinuierliche Fixieren der Kammer in der jeweiligen Stellung ermöglicht dem Anwender eine einfache und insbesondere zeitsparende Bestückung des Geräts mit den zu reinigenden medizinischen, insbesondere zahnärztlichen, Instrumenten.

Einen weiteren Vorteil der Erfindung stellt der Antrieb in Verbindung mit dessen Betätigungseinrichtung dar. Insbesondere durch das Aktivieren des Antriebs mittels der Steuerung des Reinigungs- oder Pflegegeräts wird die Reinigungs- oder Pflegekammer selbstständig nach einem Reinigungs- oder Pflegeprozess aus einer Reinigungs- oder Pflegestellung in eine Ruhe- und/ oder Bedienungsstellung sowie vor einem Reinigungs-oder Pflegeprozess aus einer Ruhe- und/ oder Bedienungsstellung in eine Reinigungs-oder Pflegestellung bewegt. Insbesondere das automatische Öffnen der Kammer, vorzugsweise nach einer Reinigung oder Pflege der medizinischen Instrumente unter Wärmeauftrag, führt zu einem schnellen Abkühlen der Instrumente.

Im Rahmen der Erfindung versteht es sich selbstverständlich, dass das Reinigungs- oder Pflegegerät, insbesondere dessen Antrieb, nicht auf das oben beschriebene Ausführungsbeispiel beschränkt ist. Die Reinigungs- oder Pflegekammer kann zum Beispiel um zumindest eine, vorzugsweise zwei, oder auch mehrere Achsen bewegbar gelagert sein. Des Weiteren können die Achsen neben einer vertikalen oder horizontalen Ausrichtung auch in verschiedenen Winkeln von 0 bis 90 Grad zur vertikalen Achse des Reinigungs- oder Pflegegeräts angeordnet sein.

Nachfolgend wird die Erfindung anhand mehrerer Ausführungsbeispiele und in Verbindung mit den beigefügten Zeichnungen erläutert.

Dabei zeigt:
Figur 1 ein Ausführungsbeispiel eines Reinigungs- oder Pflegegeräts für medizinische, insbesondere zahnärztliche, Instrumente in der Außenansicht,
Figur 2 eine Schnittdarstellung einer bewegbaren Reinigungs- oder Pflegekammer mit dem Antrieb für die Reinigungs- oder Pflegekammer in der Reinigungs- oder Pflegestellung,
Figur 3 eine Schnittdarstellung der bewegbaren Reinigungs- oder Pflegekammer mit dem Antrieb für die Reinigungs- oder Pflegekammer in der Ruhestellung,
Figur 4 eine Schnittdarstellung der bewegbaren Reinigungs- oder Pflegekammer in der Bedienungsstellung,
Figur 5 das Reinigungs- oder Pflegegerät in der Außenansicht mit einer radial um eine horizontale Achse geschwenkten Reinigungs- oder Pflegekammer in der Bedienungsstellung,
Figur 6 ein weiteres Ausführungsbeispiel des Reinigungs- oder Pflegegeräts in der Außenansicht mit einer entlang einer horizontalen Achse bewegten Reinigungs- oder Pflegekammer in der Bedienungsstellung.

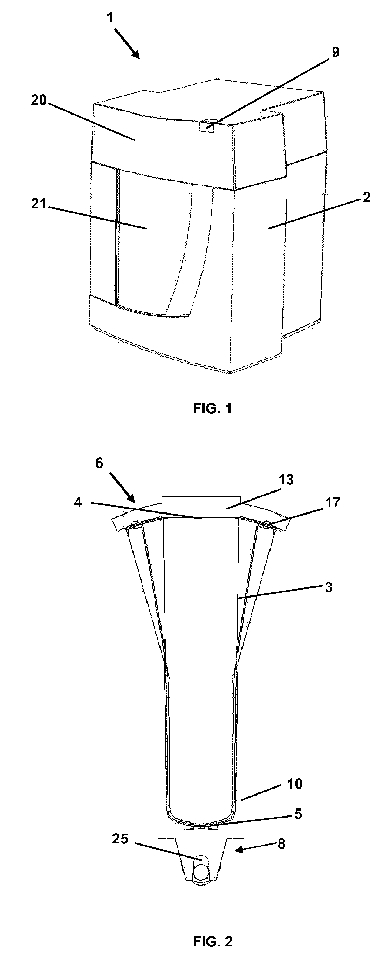

Das in Figur 1 dargestellte Reinigungs- oder Pflegegerät 1 für medizinische, insbesondere zahnärztliche, Instrumente umfasst ein Gehäuse 2 mit mehreren Außenwänden. Eine Außenwand, insbesondere eine Seitenwand, bildet die Bedienungsseite 20 des Reinigungs- oder Pflegegeräts 1. Diese weist eine Betätigungseinrichtung 9 für einen in dem Gerät 1 angeordneten Antrieb und eine Tür 21 auf. Über die Tür 21 ist eine im Inneren des Gehäuses 2 angeordnete Reinigungs- oder Pflegekammer für zumindest ein medizinisches, insbesondere zahnärztliches, Instrument zugänglich. Neben der Reinigungs- oder Pflegekammer sind in dem Gehäuse 2 eine Steuerung sowie weitere für den Reinigungs- oder Pflegeprozess notwendige Bauteile, wie z.B. eine Fördereinrichtung für Reinigungs- oder Pflegemittel durch eine Medienzuführung in die Reinigungs- oder Pflegekammer, ein Behälter für Reinigungs-oder Pflegemittel, oder ein Medienabfluss zum Ableiten der aus der Kammer geleiteten Medien angeordnet.

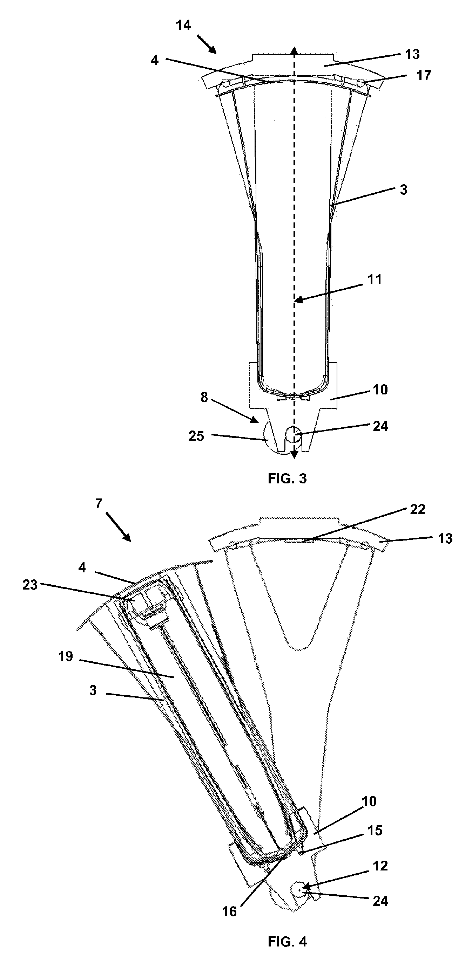

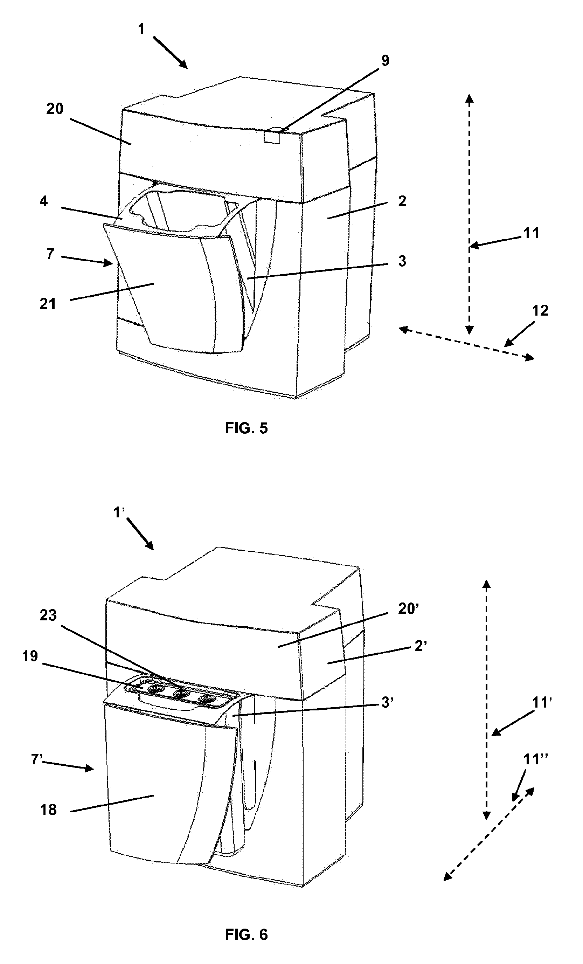

In Figur 2 ist eine Schnittdarstellung der beweglich gelagerten Reinigungs- oder Pflegekammer 3 mit dem Antrieb 8 des Reinigungs- oder Pflegegeräts 1 in der Reinigungs- oder Pflegestellung 6 abgebildet. Während des Reinigungs- oder Pflegeprozesses wird die Reinigungs- oder Pflegekammer 3 mit ihrer Öffnung 4, über welche zumindest ein Instrument in der Kammer 3 aufgenommen werden kann, mittels des Antriebs 8 gegen ein Wandelement 13 des Reinigungs- oder Pflegegeräts bewegt und positioniert. Zwischen der Kammer 3 und dem Wandelement 13 ist vorzugsweise eine Dichtung 17 angeordnet, um die Reinigungs- oder Pflegekammer 3, insbesondere druckdicht, zu schließen. Zur Reinigung und/ oder Pflege des zumindest einen Instruments werden über die Medienzuführung 5, ein oder mehrere Reinigungs- oder Pflegemedien auf die Außenseite des zumindest einen Instruments abgegeben. Wie in den Figuren 4 und 6 gezeigt, werden, neben einer Auftragung der Reinigungs- oder Pflegemedien mittels einer oder mehrerer Düsen 15 auf die Außenseiten der vorzugsweise drei in der Kammer 3 aufgenommenen Instrumente, die Medien über insbesondere zweiteilige Verbindungskupplungen 22, 23 in das Innere, insbesondere in die Versorgungs- und Fluidleitungen, der Instrumente geführt.

Die Reinigungs- oder Pflegekammer ist vorzugsweise aus Metall gefertigt und bildet mittels mehrerer Außenwände einen geschossenen Reinigungs- oder Pflegeraum, welcher über die Öffnung 4 zugänglich ist.

In Figur 3 wird die bewegbare Reinigungs- oder Pflegekammer 3 in Verbindung mit dem Antrieb 8 in der Ruhestellung 14 gezeigt. Nach einem Reinigungs- oder Pflegeprozess wird die Kammer 3 aus der Reinigungs- oder Pflegestellung 6 mittels des Antriebs 8 in eine Ruhestellung 14 bewegt. Hierbei bewegt der Antrieb 8 die in einer Aufnahme 10 gehaltene Reinigungs- oder Pflegekammer 3 entlang einer zum Reinigungs- oder Pflegegerät 1 vertikal verlaufenden Achse 11, wodurch die zumindest eine Öffnung 4 der Reinigungs- oder Pflegekammer 3 sich von dem Wandelement 13 und gegebenenfalls zusätzlich von der Dichtung 17 entfernt und die Reinigungs- oder Pflegekammer 3 geöffnet wird. Der Antrieb 8 ist vorzugsweise durch einen Exzenterantrieb, insbesondere mit einem Elektromotor und Mitnehmer 25, ausgebildet. Die Reinigungs- oder Pflegekammer 3 ist, wie insbesondere in Figur 2 gezeigt, zwischen der Reinigungs- oder Pflegestellung und der Ruhestellung 14 über eine Aufnahme 10 auf dem Mitnehmer 25 gelagert. Durch die Drehung des Mitnehmers 25 mittels der Welle 24 des Elektromotors relativ zur Kammer 3 wird die Reinigungs- oder Pflegekammer 3 aus der Reinigungs-oder Pflegestellung in eine Ruhestellung 14, in welcher die Aufnahme 10 auf der Welle 24 gelagert wird, linear entlang einer Achse 11 bewegt. Der Exzenterantrieb 8 wird vorzugsweise über die Steuerung des Reinigungs- oder Pflegegeräts aktiviert, so dass nach oder vor einem Reinigungs- oder Pflegeprozess die Kammer 3 automatisch geöffnet oder geschlossen wird.

Figur 4 zeigt die Reinigungs- oder Pflegekammer 3 in der Bedienungsstellung 7. Durch das Schwenken der Kammer 3 radial um eine Schwenkachse 12 von der Ruhestellung 14 in die Bedienungsstellung 7 wird die Öffnung 4 der Reinigungs- oder Pflegekammer 3 gegenüber dem Wandelement 13 verschwenkt, wodurch der Reinigungs- oder Pflegeraum der Kammer 3 für den Anwender zugänglich wird. Die Reinigungs- oder Pflegekammer 3 ist zwischen der Ruhestellung 14 und der Bedienungsstellung 7 über die Aufnahme 10 drehbar auf der Welle 24 gelagert und vorzugsweise mittels eines nicht abgebildeten Federantriebs gegen das Reinigungs- oder Pflegegerät vorgespannt. Wird der Schwenkantrieb mittels des Betätigungselements aktiviert, schwenkt die Kammer 3 in Wirkrichtung der Federkraft des Federantriebs aus der Ruhestellung 14 in die Bedienungsstellung 7.

Wie Figur 4 des Weiteren zeigt, weist die Reinigungs- oder Pflegekammer 3, neben einer Medienzuführung für die Reinigungs- oder Pflegemedien mittels einer oder mehrerer Düsen 15, zumindest eine, vorzugsweise drei, Verbindungskupplungen 22, 23 zur Innenreinigung der in der Kammer 3 aufgenommenen Instrumente auf. Mittels der Verbindungskupplungen 22, 23 werden ein oder mehrere Reinigungs- oder Pflegemedien in das Innere der Instrumente gefördert. Die Verbindungskupplungen 22, 23 sind insbesondere zweiteilig ausgebildet, wobei der erste Teil 22 mit dem Gehäuse, vorzugsweise mit dem Wandelement 13, des Reinigungs- oder Pflegegeräts und der zweite Teil 23 mit einer Reinigungs- oder Pflegekassette 19 zur Aufnahme der medizinischen, insbesondere zahnärztlichen, Instrumente in dem Reinigungs- oder Pflegeraum verbunden ist. Beide Teile 22, 23 der Verbindungskupplungen sind in der Reinigungs- oder Pflegestellung mittels des Antriebs 8 miteinander gekoppelt und in der Ruhestellung sowie in der Bedienungsstellung voneinander entkoppelt. Die Kammer 3 weist des Weiteren zumindest einen Medienablauf 16 auf, welcher in der Reinigungs-oder Pflegestellung, der Ruhestellung 14 und in der Bedienungsstellung 7 in Fluidverbindung mit dem Medienabfluss des Reinigungs- oder Pflegegeräts steht.

In Figur 5 ist das Reinigungs- oder Pflegegerät 1 in der Außenansicht mit einer radial um eine horizontale Achse 12 geschwenkten Reinigungs- oder Pflegekammer 3 in der Bedienungsstellung 7 abgebildet. Hierbei ist die Kammer 3 aus der Bedienungsseite 20 des Gehäuses 2 geschwenkt, so dass der Reinigungs- oder Pflegeraum der Kammer 3 über die Öffnung 4 zugänglich ist. Die Tür 21 des Reinigungs- oder Pflegegeräts 1 ist mit dem Schwenkantrieb und/ oder der Reinigungs- oder Pflegekammer 3 gekoppelt. In der oberen Hälfte der Bedienungsseite 20 des Gehäuses 2 ist vorzugsweise die Betätigungseinrichtung 9 zum Aktivieren des Antriebs 8 angeordnet. Bevor der Antrieb 8 die Reinigungs- oder Pflegekammer 3 in eine Bedienungsstellung 7, vorzugsweise radial um eine horizontal zum Reinigungs- oder Pflegegerät 1 verlaufenden Schwenkachse 12, schwenkt, ist es vorteilhaft zum Öffnen der Kammer 3 diese vorangehend linear entlang einer insbesondere vertikalen Achse 11 zu bewegen. Der Winkel der radialen Schwenkbewegung beträgt vorzugsweise in etwa 30 Grad zur vertikalen Achse des Reinigungsgeräts.

Figur 6 zeigt ein weiteres Ausführungsbeispiel des Reinigungs- oder Pflegegeräts 1 mit einer in eine Bedienungsstellung 7' bewegten Reinigungs- oder Pflegekammer 3'. Zum Öffnen der Kammer 3' weist das Reinigungs- oder Pflegegerät 1' einen Antrieb auf, welcher die Kammer 3' linear entlang einer vertikalen Achse 11' aus einer Reinigungs-oder Pflegestellung in eine Ruhestellung verfährt. In einer weiteren Bewegung bewegt der Antrieb die Reinigungs- oder Pflegekammer 3' entlang einer horizontalen Achse 11" " aus der Bedienungsseite 20' des Gehäuses 2'. Die Reinigungs- oder Pflegekammer 3' ist in diesem Ausführungsbeispiel insbesondere als Schub 18 ausgebildet, welcher mittels eines Antriebs linear entlang einer oder mehrerer Achsen 11', 11" verfahrbar ist. Der Antrieb wird mittels einer Betätigungseinrichtung aktiviert, welche bei diesem Ausführungsbeispiel durch die Kammer 3' selbst und/ oder der Steuerung des Reinigungs- oder Pflegegeräts 1' gebildet ist.

Die Erfindung ist nicht auf das beschriebene Ausführungsbeispiel beschränkt, sondern umfasst alle Ausführungen, die das prinzipielle, sinngemäße Funktionsprinzip der Erfindung anwenden oder beinhalten. Insbesondere der Antrieb zum Bewegen der Reinigungs- oder Pflegekammer entlang oder Schwenken um eine Schwenkachse kann mechanisch, elektrisch oder hydraulisch ausgeführt sein. Der Antrieb ist vorzugsweise als Hubantrieb, Schubantrieb oder Drehantrieb ausgebildet. Des Weiteren ist die Erfindung nicht auf die ausgeführten Kombinationen der Antriebe beschränkt. Neben der Kombination eines Drehantriebs mit einem Hubantrieb, oder eines Hubantriebs mit einem Schubantrieb sind weitere Kombinationen, wie z.B. die Verwendung eines Drehantriebs mit einem Schubantrieb, denkbar. Des Weiteren ist die Erfindung nicht auf ein Reinigungs- oder Pflegegerät mit einer Reinigungs- oder Pflegekammer beschränkt, welche nur an einem Ende eine Öffnung zum Beladen der Kammer aufweist. Vielmehr kann sich die Öffnung über mehrere Seiten der Kammer erstrecken.

## Patentansprüche

1. Reinigungs- oder Pflegegerät (1, 1') für medizinische, insbesondere zahnärztliche, Instrumente mit einem Gehäuse (2, 2'), einer Reinigungs- oder Pflegekammer (3, 3') mit zumindest einer Öffnung (4) zum Einbringen und Entnehmen zumindest eines zu reinigenden oder pflegenden Instruments, sowie einer Medienzuführung (5) zur Versorgung der Reinigungs- oder Pflegekammer (3, 3') mit einem Reinigungs- oder Pflegemittel, wobei die Reinigungs- oder Pflegekammer (3, 3') zwischen einer Reinigungs- oder Pflegestellung (6) und einer Bedienungsstellung (7, 7') zum Einbringen und Entnehmen des zumindest einen Instruments beweglich gelagert ist, **dadurch gekennzeichnet, dass** für die Reinigungs- oder Pflegekammer (3, 3') ein Antrieb (8) vorgesehen ist, welcher die Reinigungs- oder Pflegekammer (3, 3') zwischen der Reinigungs- oder Pflegestellung (6) und der Bedienungsstellung (7, 7') bewegt.

2. Reinigungs- oder Pflegegerät (1, 1') nach Anspruch 1, **dadurch gekennzeichnet, dass** der Antrieb (8) ausgebildet ist, die Reinigungs- oder Pflegekammer (3, 3') entlang zumindest einer Achse (11, 11', 11") zu bewegen und/ oder um eine Achse (12) zu schwenken.

3. Reinigungs- oder Pflegegerät (1, 1') nach einem der vorherigen Ansprüche, **dadurch gekennzeichnet, dass** der Antrieb (8) ausgelegt ist, die Reinigungs-oder Pflegekammer (3, 3') in der Reinigungs- oder Pflegestellung (6), der Bedienungsstellung (7) und einer weiteren Stellung (14) zwischen der Reinigungs- oder Pflegestellung und der Bedienungsstellung zu positionieren.

4. Reinigungs- oder Pflegegerät (1, 1') nach einem der vorherigen Ansprüche, **dadurch gekennzeichnet, dass** der Antrieb (8) ausgebildet, ist die Reinigungs-oder Pflegekammer (3, 3') derart zu positionieren, dass die in der Reinigungs-oder Pflegekammer (3, 3') aufgenommenen Instrumente in der Reinigungs- oder Pflegestellung (6) mit der Medienzuführung (5) gekoppelt und in der Bedienungsstellung (7, 7') von der Medienzuführung entkoppelt sind.

5. Reinigungs- oder Pflegegerät (1, 1') nach einem der vorherigen Ansprüche, **dadurch gekennzeichnet, dass** der Antrieb (8) durch eine Betätigungseinrichtung (9) aktivierbar ist.

6. Reinigungs- oder Pflegegerät (1, 1') nach Anspruch 5, **dadurch gekennzeichnet, dass** die Betätigungseinrichtung (9) an der Außenseite des Gehäuses (2, 2') und/ oder an der Reinigungs- oder Pflegekammer (3, 3') angeordnet ist.

7. Reinigungs- oder Pflegegerät (1, 1') nach einem der vorherigen Ansprüche, **dadurch gekennzeichnet, dass** das Reinigungs- oder Pflegegerät (1, 1') eine Steuerung aufweist, die den Antrieb (8), vorzugsweise vor oder nach einem Reinigungs- oder Pflegeprozess, aktiviert.

8. Reinigungs- oder Pflegegerät (1, 1') nach einem der vorherigen Ansprüche, **dadurch gekennzeichnet, dass** der Antrieb (8) einen Exzenterantrieb (8), insbesondere einen Elektromotor mit einem Mitnehmer (25), umfasst.

9. Reinigungs- oder Pflegegerät (1, 1') nach einem der vorherigen Ansprüche, **dadurch gekennzeichnet, dass** der Antrieb (8) einen Federantrieb umfasst.

10. Reinigungs- oder Pflegegerät (1, 1') nach einem der vorherigen Ansprüche, **dadurch gekennzeichnet, dass** das Reinigungs- oder Pflegegerät (1, 1') eine Führung für die Reinigungs- oder Pflegekammer (3, 3') aufweist, um die Kammer (3, 3') entlang einer Achse (11, 11', 11") oder um eine Achse (12) zu führen.

11. Reinigungs- oder Pflegegerät (1, 1') nach Anspruch 8, **dadurch gekennzeichnet, dass** die Reinigungs- oder Pflegekammer (3, 3') durch eine Drehung des Mitnehmers (25) relativ zur Reinigungs- oder Pflegekammer (3, 3') linear entlang einer Achse (11, 11', 11") bewegbar ist.

12. Reinigungs- oder Pflegegerät (1, 1') nach einem der Ansprüche 1 bis 11, **dadurch gekennzeichnet, dass** das Reinigungs- oder Pflegegerät (1, 1') eine Welle (24) aufweist, auf welcher die Reinigungs- oder Pflegekammer (3, 3') gelagert ist, so dass die Reinigungs- oder Pflegekammer (3, 3') um die Achse (12) der Welle (24) schwenkbar ist.

13. Reinigungs- oder Pflegegerät (1, 1') nach einem der vorherigen Ansprüche, **dadurch gekennzeichnet, dass** die Reinigungs- oder Pflegekammer (3, 3') einen Medienablauf (16) aufweist, welcher in der Reinigungs- oder Pflegestellung (6) und in der Bedienungsstellung (7, 7') in Fluidverbindung mit dem Medienabfluss des Reinigungs-oder Pflegegeräts (1, 1') steht.

14. Reinigungs- oder Pflegegerät (1, 1') nach einem der vorherigen Ansprüche, **dadurch gekennzeichnet, dass** die zumindest eine Öffnung (4) der Reinigungs-oder Pflegekammer (3, 3') zum Einbringen und Entnehmen zumindest eines zu reinigenden oder pflegenden Instruments an einem Ende der Reinigungs- oder Pflegekammer (3, 3') vorgesehen ist, wobei die Öffnung (4) der Reinigungs- oder Pflegekammer (3, 3') in der Reinigungs- oder Pflegestellung (6) durch ein Wandelement (13) des Reinigungs- oder Pflegegeräts (1, 1') verschließbar ist.

15. Verfahren zur Aufnahme eines medizinischen, insbesondere zahnärztlichen, Instruments in einem Reinigungs- oder Pflegegerät (1, 1') nach einem der vorherstehenden Ansprüche, **dadurch gekennzeichnet, dass** der Antrieb (8) zum Öffnen und Schließen der Reinigungs- oder Pflegekammer (3, 3') diese zwischen einer Reinigungs- oder Pflegestellung (6) und einer Bedienungsstellung (7) entlang zumindest einer Achse (11, 11', 11") bewegt und/ oder um eine Schwenkachse (12) schwenkt.
